# EUROPÄISCHE PATENTSCHRIFT

(11) **EP 0 636 428 B1**
(45) Veröffentlichungstag und Bekanntmachung des Hinweises auf die Patenterteilung: **15.10.1997**
(21) Anmeldenummer: 94110312.9
(22) Anmeldetag: 02.07.1994
(51) Int. Cl.: B09B 3/00

(54) **Verfahren zum Wiederverwerten von kohlenstoffaserhaltigen Verbundwerkstoffen mit kohlenstoffhaltiger, nicht verkokter Matrix**
Process for the recycling of carbon fiber composites with a carbon containing not pyrolysed matrix
Procédé de recyclage des composites de fibres de carbone qui contiennent une matrice de carbone non pyrolysée.

(30) Priorität: 31.07.1993 DE 4325775
(43) Veröffentlichungstag der Anmeldung: 01.02.1995
(60) Teilanmeldung: 96100900.8
(73) Patentinhaber: SGL TECHNIK GMBH, 86405 Meitingen (DE)
(72) Erfinder: Habenicht, Hinrich, Dipl.-Ing., D-86368 Gersthofen (DE); Gruber, Udo, Dipl.-Ing., D-86356 Neusäss (DE)

(56) Entgegenhaltungen:
- EP-A- 0 466 962
- CHEMICAL ABSTRACTS, Band 121, Nr. 6, 8. August 1994 Columbus, Ohio, USA S. ICHIKAWA et al. "Treat- ment of carbon fiber rein- forced plastic wastes" Seite 531, Spalte 2, Nr. 64 795n; & JP-A-06 099 160 (94 099 160)
- CHEMICAL ABSTRACTS, Band 119, Nr. 24, 13. Dezember 1994 Columbus, Ohio, USA A. FUJIMOTO "Fiber-rein- forced composites and treat- ment of their wastes" Seite 166, Spalte 1, Nr. 252 696p; & JP-A-05 237 841 (93 237 841)

## Beschreibung

Die Erfindung betrifft ein Verfahren zum Wiederverwerten von Abfällen oder Reststücken aus kohlenstoffaserverstärkten Kunststoffen (CFK) mit Matrices aus hochmolekularen organischen Verbindungen, insbesondere aus kohlenstoffaserhaltigen Verbundwerkstoffen mit einer Matrix aus der Gruppe duroplastische, thermoplastische Kunstharze, organische Elaste, Peche und aus Mischungen der genannten Matrixsubstanzen.

Die Beseitigung nicht mehr benötigter oder unbrauchbar gewordener Formkörper aus Verbundwerkstoffen mit Kohlenstoffaserverstärkung oder von kohlenstoffaserhaltigen Abfällen aus Herstellungsprozessen von Verbundwerkstoffen ist ein zunehmend größer werdendes Problem, das auch der aus technischer Sicht vorteilhaften Ausweitung des Einsatzes derartiger Verbundwerkstoffe entgegensteht. Sofern diese Verbundwerkstoffe oder deren Abfälle bzw. Reststücke in umweltverträglichem Zustand vorliegen, könnten sie deponiert werden. Ungünstigerweise müssen viele dieser Stoffe, z.B. Halbfertigprodukte, wegen ihrer chemischen Zusammensetzung sogar zu hohen Kosten als Sondermüll entsorgt werden. Aber auch für den deponierbaren Teil dieser Stoffklasse wäre eine Deponierung ein sehr teurer Weg der Entsorgung, da es sich hier wegen ihrer Zusammensetzung aus hochwertigen Kohlenstofffasern und organischen Polymeren oder Polymergemischen um Wertstoffe handelt, die für den ohnehin immer knapper und teurer werdenden Deponieraum zu schade sind. Es wurden deshalb Konzepte und Verfahren zu einer nutzbringenden Verwertung ausgearbeitet. Diese Konzepte sind jedoch mit Nachteilen behaftet, die ihre Anwendung in vielen Fällen erschwert oder verhindert.

Da die die Erfindung betreffenden Körper in aller Regel aus zu 100% oxidierbaren Stoffen bestehen, wäre eine Verbrennung ein Weg zu ihrer Beseitigung. Aus heutiger Sicht ist dieses Verfahren jedoch zu teuer. Selbst bei Nutzung der entstehenden Verbrennungswärme muß hierbei mit Kosten von DM 240,-- bis 400,-- pro t gerechnet werden (Chemische Rundschau 45, 1992, S. 18-22), so daß dieses Verfahren erst bei wesentlich höheren Erdölpreisen als heute rentabel arbeitet (Tagungsbericht zur Fachtagung des Süddeutschen Kunststoffzentrums vom 18./19. Oktober 1989 in Würzburg). Andere Verfahren zur Verwertung sehen eine thermische oder chemische Spaltung vor (siehe letztgenannte Literaturstelle). Die Verfahren zur chemischen Spaltung erfordern große Mengen einheitlich zusammengesetzter Verbundwerkstoffe, um den erforderlichen anlagentechnischen und energetischen Aufwand auch nur einigermaßen zu rechtfertigen. Diese Voraussetzungen liegen bei der diese Erfindung betreffenden Werkstoffklasse jedoch zur Zeit nicht vor. Thermische Abbauverfahren dienen entweder der vorläufig noch zu teuren Energiegewinnung oder man kann dadurch Schwel- und Crackprodukte, die wiederverwertbar sind, erhalten. Aber auch letzteres Verfahren ist im Vergleich zu den derzeitigen Erdöl- und Kraftstoffpreisen noch zu teuer. Die Rückstände der thermischen Verfahren werden bis auf das im folgenden beschriebene Verfahren deponiert. Bei diesem Verfahren, bei dem mit Kohlenstoffasern verstärkte Kunststoffe aufgearbeitet werden sollen, wird bei einer ersten thermischen Behandlung zunächst das Matrixharz pyrolysiert und es werden die dabei zurückbleibenden Kohlenstoffasern zu quasi unidirektionalen Prepregs weiterverarbeitet (Chemische Rundschau 45, 1992, S. 18 bis 22). Der Nachteil dieses Verfahrens ist, daß hier nur der erhaltene Rückstand an Fasern wiederverwendet wird. Bei dem in der EP-Application Nr. 0 530 741 A1 beschriebenen Verfahren werden Abschnitte von aus C-Fasern hergestellten porösen Körpern mit einer durch Carbon Vapor Impregnation (CVI) oder Carbon Vapor Deposition (CVD) hergestellten Kohlenstoffmatrix wiederverwertet. Die Abschnitte werden dazu zerkleinert und die verwertbaren Fasern vom zerkleinerten Gut abgetrennt, zu Faserlagen verarbeitet und durch Vernadeln mit anderen lockeren Fasergebilden verbunden. Auf die Verwertung des nicht aus brauchbaren Fasern bestehenden Restgutes aus der Zerkleinerung wird hier verzichtet.

Es war die Aufgabe der Erfindung, ein Verfahren anzugeben, mittels dessen nicht mehr verwendbare Teile oder Reststücke aus kohlenstoffaserverstärkten Kunststoffen unter maximal möglicher Ausnutzung ihres Kohlenstoffgehaltes zur Herstellung neuer Verbundwerkstoffe wiederverwertet werden.

Die Aufgabe wird mit einem Verfahren gemäß dem kennzeichnenden Teil des Patentanspruchs 1 gelöst. Die abhängigen Ansprüche geben Ausformungen der Erfindung wieder.

Das erfindungsgemäße Verfahren sieht für alle Verfahrensvarianten vor, daß Körper oder Teile aus mit Kohlenstofffasern verstärktem Verbundwerkstoff so aufbereitet werden, daß ein praktisch nur aus Kohlenstoffasern sowie Kohlenstoffkörnern und Kohlenstoffpulver bestehendes neues Ausgangsmaterial entsteht, das, abgesehen von dem Kohlenstoffgehalt der durch die Pyrolyse der Rest- und Abfallprodukte zwangsläufig entstehenden und im wesentlichen entweichenden Crackprodukte, den gesamten Kohlenstoffgehalt des ursprünglichen Ausgangsmaterials aus mit Kohlenstoffasern verstärktem Kunststoff enthält, und daß unter Verwendung dieses neuen Ausgangsmaterials als verstärkendem Füller unter Zusatz eines geeigneten Bindemittels oder Matrixvorprodukts durch einen nachfolgenden Verkokungsschritt Körper aus einem neuen kohlenstoffaserverstärkten Verbundwerkstoff mit Kohlenstoffmatrix hergestellt werden. Die Produkteigenschaften derartiger Körper können danach durch weitere, im Prinzip bekannte Verfahrensschritte modifiziert und entsprechenden Anwendungszwecken angepaßt werden. Unter Kohlenstofffasern im Sinne dieser Erfindung werden im wesentlichen aus Kohlenstoff bestehende Fasern verstanden, die einer Temperaturbehandlung von mehr als 600 °C unterworfen worden sind.

Die für die vorliegende Erfindung verwendete Gruppe wiederverwertbarer Stoffe besteht aus mit Kohlenstofffasern verstärkten Verbundwerkstoffen mit einer kohlenstoffhaltigen, verkokbaren aber nicht verkokten Matrix. Zu dieser Gruppe von Matrix-Stoffen zählen thermoplastische und duroplastische Kunstharze, organische Elaste, Peche und Mischungen der genannten Stoffe. Zur Wiederverwertung werden die Verbundwerkstoffe dieser Klasse in einem ersten Verfahrensschritt unter Ausschluß von Sauerstoff oder anderen oxidierend wirkenden Substanzen auf eine Temperatur erhitzt, bei der eine Verkokung aller zersetzbaren organischen Substanzen erfolgt. Der bevorzugte, hierfür angewendete Temperaturbereich liegt zwischen 800 und 1200 °C. Zur Anpassung an den späteren Verwendungszweck oder an nachfolgende Verfahrensschritte können auch außerhalb dieses Bereiches liegende Verkokungstemperaturen angewandt werden. Die Verkokungszeit und die bei dem Verkokungsvorgang angewandten Temperaturgradienten richten sich nach dem gewünschten Ergebnis. Werden große Temperaturgradienten verwendet, kann innerhalb einer kurzen Zeit verkokt werden. Man erzielt dabei aber eine vergleichsweise geringe Koksausbeute. Mit geringer werdenden Temperaturgradienten werden bis zu einem Grenzwert steigende Koksausbeuten erhalten. Vorteilhafterweise arbeitet man mit einer Verkokungszeit von ca. 1 Woche und über die Zeit gemittelten Gradienten von 4 bis 6 K/h, wobei im kritischen Verkokungsbereich von 200 bis 550 °C niedrigere und außerhalb dieses Bereichs entsprechend größere Gradienten Verwendung finden. Große Mengen von wiederverwertbarem Material werden zweckmäßigerweise in Nachbrenneinrichtungen wie sie von der Kohlenstoff- und Graphitelektrodenproduktion her bekannt sind, z.B. Tunnel-, Herdwagen- oder Ringöfen unter Verwendung von Brennbehältern verkokt.

Sofern das erhaltene Verkokungsprodukt kleinstückig bis feinkörnig ist oder flächige Bereiche von bis zu maximal 50 mm Kantenlänge enthält, kann es direkt weiterverarbeitet werden. Größere Teile werden vor der Weiterverarbeitung auf geeigneten Zerkleinerungsmaschinen wie z.B. Backenbrechern, Schneid-, Prall- oder Hammermühlen, Feinrundbrechern, Glockenmühlen zerkleinert und dann direkt oder, falls dies wegen der Zusammensetzung des zerkleinerten Gutes erforderlich erscheint, nach Zusatz weiterer, die Trockengutzusammensetzung korrigierender Zusätze wie C-Fasern, -Körnung oder -Staub weiterverarbeitet. Für derartige korrigierende Zusätze werden bevorzugt durch Wiederverwertung nach der Erfindung gewonnene Stoffe oder bei der Herstellung und Verarbeitung von C-Fasern angefallene Abfälle verwendet. Die Weiterverarbeitung geschieht in einem zweiten Verfahrensschritt durch Mischen des Mahlguts und, gegebenenfalls der Mischung aus Mahlgut und die Zusammensetzung des Mahlguts korrigierenden Zusätzen, mit einem kohlenstoffhaltigen, verkokbaren Bindemittel. Vor dem Mischen wird der Bindemittelgehalt mittels der dem Fachmann geläufigen Methoden unter Berücksichtigung der Erfordernisse des gewählten Bindemittels, des später anzuwendenden Formgebungs- und Verkokungsverfahrens sowie der gewünschten Eigenschaften des verkokten Körpers ermittelt. Als Bindemittel kommen aus der Kohlenstofftechnik dafür bekannte Stoffe wie z.B. Kunstharze und Peche oder Teere in flüssiger oder fester Form oder gegebenenfalls in Form von Lösungen in Frage. Bevorzugt werden hier die hohe Koksausbeuten ergebenden Bindemittel wie Phenolformaldehydharze und Peche, mit denen vergleichsweise dichte geringporöse Körper nach dem Verkoken erhalten werden, eingesetzt. Für die Herstellung poröser, leichter Körper wählt man Bindemittel mit geringerer Koksausbeute wie Epoxidharze, Thermoplaste oder Cellulose- bzw. stärkehaltige Binder. Der Mischvorgang wird vorzugsweise in langsam laufenden Knetmischern wie z.B. Mischern des Z-Arm-Typs durchgeführt, um einerseits eine weitere Zerkleinerung der Fasern und des Korns zu vermeiden und andererseits größere, noch zusammenhängende Stücke aus verkoktem Ausgangsmaterial weiter in die Faser- und die Matrixkomponente aufzuspalten. Wo dies keine Rolle spielt, können auch Schnellmischer in Trog- oder Trommelform wie beispielsweise Eirich- oder Lödige-Mischer eingesetzt werden. Je nach gewähltem Bindemittelsystem werden die Mischer geheizt oder bei Normaltemperatur betrieben.

Die als sogenannte "grüne Mischung" bezeichnete Mischung aus Feststoffen und Binder wird sodann in einem dritten Verfahrensschritt zu Körpern geformt. Bevorzugte, hierfür verwendete Formgebungseinrichtungen sind Gesenkpressen, deren Formen heizbar sein können oder Strangpressen, speziell Kolbenstrangpressen. Die Formgebung ist jedoch nicht auf diese Preßeinrichtungen beschränkt. Wo dies den Aufwand rechtfertigt, kann auch isostatisch gepreßt werden. Für einfachste Anforderungen reicht das Stampfen in eine Form. Die geformten Körper werden, je nach verwendetem Bindemittelsystem, entweder in den Formen durch Aushärtenlassen oder durch Abkühlen unter den Erstarrungsbereich des Bindemittels in einen festen, ohne Deformationen manipulierbaren Zustand gebracht oder ihr Bindemittelgehalt und/oder der Erweichungsbereich des Bindemittels wird vor dem eigentlichen Formgebungsprozeß so eingestellt, daß der Formkörper nach dem Entformen oder dem Extrudieren, gegebenenfalls nach einer kurzen Abschreckzeit und nachfolgender Auskühlzeit formstabil und ohne Deformationen manipulierbar ist. Die nach dem erfindungsgemäßen Verfahren hergestellten Körper haben vorzugsweise flächige oder blockförmige, vorzugsweise orthogonale Gestalt. Es können aber auch Körper in anderen Formen wie z.B. Profilstäbe, Rohre oder Tiegel hergestellt werden.

Die aus der "grünen Mischung" hergestellten Körper werden sodann in einem vierten Schritt zu einem kohlenstofffaserverstärkten Körper mit Kohlenstoffmatrix, einem sogenannten CFC-Körper verkokt. Das Verkoken geschieht, wie dies vorstehend bereits im Prinzip beschrieben worden ist, unter Ausschluß oxidierender Medien nach vorgewählten Temperatur-Zeitprogrammen. Es kann unter vermindertem, Umgebungs- oder Überdruck verkokt werden. Die Wahl der Verfahrensbedingungen richtet sich nach der Größe und der Rohdichte des zu verkokenden Körpers sowie nach der Art des in ihm enthaltenen Bindemittels und dessen Menge, bzw. nach dessen Gehalt an beim Verkokungsprozeß zu entfernenden Flüchtigen und wird, wie dies in der Technik der Herstellung von Kohlenstoffkörpern üblich ist, durch Versuche und Testverkokungen, gegebenenfalls in Verbindung mit physikalischen Messungen wie z.B. thermogravimetrischen Untersuchungen von Fall zu Fall festgelegt.

Die nach dem Verkoken erhaltenen, ganz aus Kohlenstoff bestehenden faserverstärkten Körper können direkt einer Verwendung zugeführt werden oder sie werden durch die im folgenden beschriebenen Verfahrensschritte weiterveredelt.

Durch die Verkokung werden Körper erhalten, die im wesentlichen aus gebranntem, also nicht graphitiertem Kohlenstoff bestehen, bzw. bei denen mindestens der Binder- oder Matrixkohlenstoff nicht graphitisch ist und die ein mehr oder weniger großes offenes Porenvolumen haben. Zur Anpassung an den jeweiligen, für sie vorgesehenen Verwendungszweck können die Eigenschaften dieser Körper durch weitere, in der Technik der Kohlenstoff- und Graphitkörperherstellung wohlbekannte Verfahrensschritte modifiziert oder verbessert werden. Diese Verfahrensschritte betreffen insbesondere das Nachverdichten der Körper durch mindestens teilweises Auffüllen ihres flüssigkeitszugänglichen Porensystems mit verkokbaren Flüssigkeiten wie z.B. Pechen oder Kunstharzen oder Mischungen davon und nachfolgendes Verkoken des Infiltrats sowie das Graphitieren. Das Nachverdichten kann, falls erforderlich, mehrmals wiederholt werden, es kann aber auch an graphitierten Körpern vorgenommen werden. Der Fachmann hält durch Kombination der beschriebenen Maßnahmen in Verbindung mit der Auswahl passender Imprägniermittel ein umfangreiches Instrumentarium zur Modifizierung der durch das Wiederverwertungsverfahren hergestellten gebrannten Körper in der Hand. Durch das Nachverdichten wird die Porosität der Körper verringert und ihre Festigkeit erhöht. Die Härte und Abriebfestigkeit bleiben hoch und die niedrigen Werte für die elektrische und die Wärmeleitfähigkeit werden nur geringfügig erhöht. Durch einen Graphitierungsprozeß können die meisten dieser Eigenschaften nachhaltig verändert werden. Die elektrische und die Wärmeleitfähigkeit werden um ein Vielfaches verbessert. Härte und Abriebfestigkeit werden verringert, wodurch der Körper eine gut gleitende Oberfläche mit vorteilhaften Reibeigenschaften erhält. Die hohe Festigkeit und der E-Modul sinken etwas ab, bleiben aber auf hohem Niveau. Durch Wahl bestimmter Graphitierungstemperaturen kann der Grad der Änderung der Eigenschaften beim Übergang vom verkokten in den graphitischen Zustand noch gesteuert werden. Für die Eigenschaften des Endprodukts haben aber auch Eigenschaften und Zusammensetzungen der der Wiederverwertung zugeführten Ausgangsprodukte Bedeutung. Es ist zu beachten, welche Art Fasern, Kohlenstoffüller oder Matrix bzw. Matrixvorprodukte bei der Herstellung der C-Faser-Verbundwerkstoffe eingesetzt wurden. Für den Komplex der Fasern wären hier z.B. zu nennen: Kohlenstoffasern auf Basis Polyacrylnitril, Pech oder Cellulose, teilcarbonisierte, carbonisierte oder graphitierte Fasern, Hochmodul-, hochfeste Fasern oder Fasern hoher Festigkeit und hohen E-Moduls. Beispiele für den Komplex Kohlenstofffüller sind Koksfüller auf Kunstharzbasis, isotroper, anisotroper Koks, strukturell gut- oder schlecht geordneter Pechkoks sowie graphitische Füller. Bei den Matrixmaterialien ist zwischen Matrixkohlenstoffen auf Basis von Kunstharzen mit vergleichsweise niedrigen Koksausbeuten wie Thermoplasten, Elasten, Polyestern oder Epoxidharzen, Kunstharzen mit hohen Koksausbeuten wie Phenolharzen oder Matrizes auf Basis von Pechen wie Steinkohlenteer-, Petrol- oder Mesophasenpechen zu unterscheiden. Durch Wahl geeigneter Ausgangsprodukte und gegebenenfalls gezielten Zusatz von weiteren faserhaltigen oder faserfreien kohlenstoffhaltigen Feststoffkomponenten sowie von Matrixvorprodukten in Verbindung mit der Anwendung geeigneter Verfahrensbedingungen lassen sich die Rest- und Abfallprodukte zu für viele verschiedene Anwendungen geeigneten Produkten wiederverwerten.

Als Anwendungsgebiete für so hergestellte Produkte seien beispielhaft Brems- und Reibbeläge, thermische Isolierplatten, z.B. für die Verwendung in Hochtemperaturöfen, Unterlage- und Chargierplatten für Öfen, Schmelzformen, Düsen, Füllkörper für Energie- und Stoffaustauschprozesse, Katalysatorträger, Elektrodenplatten, Apparateeinbauten für korrosive Medien genannt.

Die nach dem erfindungsgemäßen Verfahren hergestellten Produkte können durch weitere Behandlungen, z.B. mit gegen Oxidation schützenden Ausrüstungen, Metallisieren, Silicieren etc. speziellen Verwendungszwecken zusätzlich angepaßt werden.

Die Erfindung wird im folgenden anhand ausgewählter Ausführungsbeispiele weiter erläutert:

### Beispiel 1

Abfälle von C-Faser-Gewebeprepregs mit Abmessungen von bis zu 30 cm Breite und Längen von ca. 1 m, deren Harzkomponente aus Epoxidharz bestand, wurden ohne Entfernen des anhaftenden Deckpapiers in einem Schutzgasofen in Stickstoffatmosphäre durch eine Temperaturerhöhung von Raumtemperatur auf 900 °C innerhalb von 7 Tagen verkokt. Bei diesem Vorgang wurde mit folgenden Temperaturgradienten gearbeitet:

| | |
|---|---|
| Bereich von 20 bis 200 °C: | 7,5 K/h, |
| Bereich von 200 bis 550 °C: | 3,5 K/h, |
| Bereich von 550 bis 900 °C: | 15 K/h. |

Die Endtemperatur von 900 °C wurde einen Tag lang gehalten. Nach dem Abkühlen unter Schutzgas ließen sich die langen, verkokten Prepregteile beim Hantieren leicht in kleinere Stücke zerbrechen. Das so erhaltene, aus Stücken mit Kantenmaßen kleiner ca. 20 cm bestehende Gut wurde in einen 60 l fassenden Z-Arm-Mischer, in dem als Bindemittel Phenolharz vom Resoltyp vorgelegt worden war, eingebracht. Das Gewichtsverhältnis Prepregabfälle zu Phenolharz betrug 33,5 zu 66,5 Gew.-%. Die Mischung wurde 15 Minuten lang bei Raumtemperatur gemischt. Bei diesem Mischprozeß wurde das verkokte Einsatzmaterial weiter zerkleinert und im wesentlichen in seinen Faseranteil mit Resten anhaftenden verkokten Kunstharzes und den feinkörnigen bis staubartigen Anteil an verkoktem Kunstharz aufgespalten. Der Hauptteil der erhaltenen Fasern lag in Längen von 2 bis 30 mm vor. Nach dem Mischen wurde das Mischgut kalt in eine Gesenkpreßform, Abmessungen 160 x 160 x 100 mm gefüllt und durch Drücken per Hand mit einem Hilfsstempel etwas vorverdichtet. Danach wurde ein Preßdruck von 1,1 MPa aufgegeben und der Körper unter Aufrechterhaltung dieses Druckes nach folgendem Temperatur-Zeitprogramm gehärtet.

| | |
|---|---|
| Raumtemperatur bis 80 °C, | 30 Minuten, |
| Haltezeit bei 80 °C, | 30 Minuten, |
| 80 °C bis 150 °C, | 30 Minuten, |
| Haltezeit bei 150 °C, | 2 Stunden. |

Der der Form entnommene, gehärtete "grüne" Körper hatte die Abmessungen 160 x 160 x 12,5 mm und eine Rohdichte (Masse des Körpers dividiert durch dessen Volumen) von 1,09 g/cm³. Zum nachfolgenden Verkoken oder Brennen wurde die gehärtete Platte zwischen Kohlenstoffplatten gelegt und mit diesen verspannt, um ein verzugfreies Brennen zu gewährleisten. Die so vorbereitete Plattenanordnung wurde in einen Schutzgasofen eingebracht und die "grüne" Platte dort unter Stickstoff nach dem oben für die erste Verkokung angegebenen Programm verkokt. Der nach dem Brennen erhaltene, aus Kohlenstoff bestehende poröse Körper wurde anschließend nach dem Vakuum-Druckverfahren mit einer methanolischen Lösung eines Phenolharzes auf Basis Novolak (Gewichtsverhältnis 70 % Novolak zu 30 % Methanol), die geringe Mengen Hexamethylentetramin enthielt, imprägniert. Vakuum-Druckverfahren bedeutet im vorliegenden Fall, daß der gebrannte Körper in einem Autoklaven zuerst evakuiert, dann unter Aufrechterhalten des Vakuums mit der Harzlösung überschichtet und dann auf diese Anordnung ein Druck von 6 bar aufgegeben wird. Nach dem Imprägnieren wurde der Körper erneut, wie vorbeschrieben, verkokt und danach der Imprägnierungs-Verkokungsvorgang nochmals wiederholt. Bei den drei Verkokungsschritten schrumpfte der Körper in keinem seiner Maße. Die Entwicklung des zugänglichen Porenvolumens und der Rohdichte verlief folgendermaßen:

| | Porenvolumen % | Rohdichte g/cm³ |
|---|---|---|
| grüner Zustand | 16 | 1,09 |
| verkokter Zustand | 40 | 0,94 |
| 1x nachimprägniert und gebrannt | 26 | 1,14 |
| 2x nachimprägniert und gebrannt | 17 | 1,26 |

Der zwei mal nachverdichtete und verkokte Körper hatte eine Biegefestigkeit von 32 MPa und einen E-Modul von 16,4 GPa. Er war als Heißgutunterlage für die Glasindustrie geeignet.

### Beispiel 2

Bei diesem Beispiel wurden Abfälle eingesetzt, deren Matrixanteil bereits verkokt worden war.

CFC-Abfälle in Form von Abschnitten von C-Faser-Roving-Gewebe-verstärkten Platten mit Stärken zwischen 2 und 20 mm wurden auf einer Hammermühle (Omniplex 40/32 K, Fa. Alpine AG, Siebeinsatz 5 mm Durchmesser) zerkleinert. Das zerkleinerte Gut lag in Form von ca. 40 Gew.-% Kurzfasern mit Längen bis zu 20 mm, Kokskörnern in Größen von > 100 µm bis 4 mm mit einem Gewichtsanteil von ca. 20 % und von Staub mit einer Korngröße von kleiner/gleich 100 µm mit einem Gewichtsanteil von ca. 40 % vor. 14 Gewichtsteile dieses zerkleinerten Guts wurden zusammen mit ebenfalls 14 Gewichtsteilen Randfaserabschnitten aus der Herstellung von C-Fasergeweben, die im wesentlichen aus Kohlenstoffasern mit Längen von 30 bis 60 mm bestanden, abwechselnd und portionsweise innerhalb von 15 Minuten in einen laufenden 60 l-Z-Arm-Kneter eingebracht, in dem 72 Gewichtsteile eines Phenolharzes des Resoltyps (Norsophen 1203 S) vorgelegt worden waren und danach noch weiter fünf Minuten gemischt und geknetet. Die erhaltene Mischung wurde in die Preßform (160 x 160 x 100 mm) einer Gesenkpresse eingebracht, mit einem Preßdruck von 1,1 MPa verdichtet und danach unter Aufrechterhalten dieses Druckes ausgehärtet, wobei die Temperatur der Form zunächst auf 80 °C gebracht und 30 Minuten bei dieser Temperatur gehalten wurde und dann nach Steigerung der Temperatur auf 150 °C 2 Stunden lang bei dieser Temperatur endgehärtet wurde. Der so erhaltene "grüne" Körper, der die Abmessungen 160 x 160 x 9 mm hatte, wurde nach dem in Beispiel 1 angegebenen Verkokungsschema verkokt. Beim Verkoken schrumpfte der Körper in der Höhe, d.h. in der Richtung, in der im "grünen" Zustand verdichtet worden war, um 3,6 %. Der verkokte Körper hatte folgende Kenndaten:

| | |
|---|---|
| Rohdichte | 0,82 g/cm³, |
| Biegefestigkeit | 7,4 MPa, |
| E-Modul | 3,2 GPa, |
| Druckfestigkeit | 29,5 MPa, |
| Wärmeleitfähigkeit (parallel zur Preßrichtung) | 0,5 W/mK. |

Zur weiteren Verbesserung der Materialeigenschaften wurde der Körper wie in Beispiel 1 beschrieben, noch drei mal nachverdichtet, d.h. mit Kunstharz imprägniert und jeweils nachgebrannt. Dabei entwickelte sich die Rohdichte des Körpers wie folgt:

| | |
|---|---|
| 1 x nachverdichtet | 1,05 g/cm³ |
| 2 x nachverdichtet | 1,20 g/cm³ |
| 3 x nachverdichtet | 1,27 g/cm³. |

Nach dem dritten Nachbrennschritt wurde der Körper bis zu einer Endtemperatur von 2200 °C graphitiert. Der graphitierte Körper hatte folgende Kenndaten:

| | |
|---|---|
| Rohdichte | 1,26 g/cm³, |
| Biegefestigkeit | 30 MPa, |
| E-Modul | 17 GPa, |
| Wärmeleitfähigkeit (parallel zur Preßrichtung) | 2,7 W/mK. |

## Patentansprüche

1. Verfahren zum Wiederverwerten von Abfällen oder Reststücken aus kohlenstoffaserhaltigen Verbundwerkstoffen mit einer Matrix aus der Gruppe duroplastische, thermoplastische Kunstharze, organische Elaste, Peche, Mischungen der genannten Matrixsubstanzen,
dadurch gekennzeichnet, daß
die Abfälle oder Reststücke in einem ersten Schritt zur vollständigen Umwandlung in aus Kohlenstoff bestehende Bestandteile einer Verkokungsbehandlung unterworfen werden,
in einem zweiten Schritt die Verkokungsprodukte aus dem ersten Schritt mit einem kohlenstoffhaltigen, verkokbaren Binder gemischt werden,
in einem dritten Schritt die durch den zweiten Schritt erhaltene Mischung mittels einer Formgebungseinrichtung zu einem Körper geformt wird,
und in einem vierten Schritt der durch den dritten Schritt erhaltene Formkörper verkokt wird.

2. Verfahren nach Patentanspruch 1,
dadurch gekennzeichnet, daß
die nach dem ersten Verfahrensschritt erhaltenen, verkokten Produkte vor dem zweiten Verfahrensschritt zerkleinert werden.

3. Verfahren nach einem der Patentansprüche 1 und 2,
dadurch gekennzeichnet, daß
dem aus Kohlenstoffbestandteilen bestehenden aufbereiteten Trockengut vor oder während des Mischens mit dem Matrixvorprodukt der späteren Kohlenstoffmatrix zusätzlich Füllstoffe aus der Gruppe Kohlenstofffasern, Kohlenstoffkörner, Kohlenstoffstaub, Ruß und Pech in fester Form zugesetzt wird.

4. Verfahren nach Patentanspruch 3,
dadurch gekennzeichnet, daß
die zusätzlich zugesetzten Kohlenstoffasern aus Reststücken und Abfallmaterial bestehen.

5. Verfahren nach einem der Patentansprüche 1 bis 4,
dadurch gekennzeichnet, daß
die nach dem Verkoken gemäß dem vierten Verfahrensschritt des Patentanspruchs 1 erhaltenen Formkörper mindestens einmal durch Imprägnieren mit einem flüssigen Kohlenstoffträger und nochmaliges Verkoken nachverdichtet werden.

6. Verfahren nach einem der Patentansprüche 1 bis 5
dadurch gekennzeichnet, daß
die im Rahmen des Wiederverwertungsverfahrens nach Verfahrensschritt 3 geformten und verkokten Körper oder die nach einem Nachverdichtungsschritt gemäß Patentanspruch 5 erhaltenen Körper zusätzlich auf Graphitierungstemperatur erhitzt werden.

## Claims

1. Method for recycling waste or remnants consisting of composite materials that contain carbon fibres having a matrix from the group thermosetting, thermoplastic synthetic resins, organic elastomers, pitches, mixtures of the afore-mentioned matrix substances, characterised in that
in a first step the waste or remnants are subjected to a carbonization treatment process in order to be completely converted into constituent parks consisting of carbon,
in a second step the carbonization products from the first step are mixed with a carbon-containing binder which is capable of being carbonized,
in a third step the mixture that is obtained by means of the second step is shaped by means of a shaping device to form a body,
and in a fourth step the shaped body that is obtained by means of the third step is carbonized.

2. Method according to claim 1, characterised in that the carbonized products that are obtained after the first method step are comminuted before the second method step.

3. Method according to one of the claims 1 and 2, characterised in that, in addition, fillers from the group carbon fibres, carbon grains, carbon dust, carbon black and pitch in a solid form are added to the prepared dry material consisting of carbon constituents before or whilst it is mixed with the matrix starting product of the subsequent carbon matrix.

4. Method according to claim 3, characterised in that the additionally added carbon fibres consist of remnants and waste material.

5. Method according to one of the claims 1 to 4, characterised in that the shaped bodies, which are obtained after the carbonization carried out in accordance with the fourth method step of claim 1, are redensified at least once by means of impregnation with a liquid carbon carrier and subsequent carbonization.

6. Method according to one of the claims 1 to 5, characterised in that the bodies which are shaped in the course of the recycling method according to method step 3 and are carbonized or the bodies which are obtained after a redensification step according to claim 5 are additionally heated to graphitization temperature.

## Revendications

1. Procédé de recyclage des déchets ou des débris résiduels en matériaux composites contenant des fibres de carbone, avec une matrice choisie dans le groupe des résines artificielles thermodurcissables, thermoplastiques, des élastomères organiques, des brais, des mélanges de substances de matrice citées, caractérisé en ce que
• les déchets ou débris résiduels dans une première étape sont soumis en vue d'une transformation complète en constituants formés de carbone, à un traitement de cokéfaction,
• dans une deuxième étape les produits de cokéfaction provenant de la première étape sont mélangés avec un agent liant cokéfiable contenant du carbone,
- dans une troisième étape le mélange obtenu grâce à la deuxième étape est moulé en un corps, à l'aide d'un dispositif de moulage et dans une quatrième étape le corps moulé obtenu grâce à la troisième étape, est cokéfié.

2. Procédé selon la revendication 1,
caractérisé en ce que
les produits cokéfiés obtenus selon la première étape de procédé sont broyés avant la deuxième étape de procédé.

3. Procédé selon l'une des revendications 1 et 2,
caractérisé en ce qu'
au produit séché préparé, consistant en des constituants carbonés, on ajoute avant ou pendant le mélange avec le précurseur de matrice de la matrice carbonée ultérieure, en supplément des substances de remplissage choisies dans le groupe des fibres de carbone, des grains de carbone, de la poudre de carbone, du noir de fumée et du brai sous forme solide.

4. Procédé selon la revendication 3,
caractérisé en ce que
les fibres de carbone ajoutées en plus consistent en des débris résiduels et des matériaux de déchets.

5. Procédé selon l'une des revendications 1 à 4,
caractérisé en ce que
le corps moulé obtenu conformément à la quatrième étape de procédé de la revendication 1, est recompacté au moins une fois par imprégnation avec un support de carbone liquide et cokéfié encore plusieurs fois.

6. Procédé selon l'une des revendications 1 à 5,
caractérisé en ce que
les corps moulés et cokéfiés dans le cadre du procédé de recyclage selon l'étape de procédé 3, ou bien les corps obtenus selon une étape de recompactage conformément à la revendication 5, sont chauffés en plus à la température de graphitage.
